# EUROPEAN PATENT APPLICATION

(11) **EP 2 793 175 A2**
(43) Date of publication of application: **22.10.2014**
(21) Application number: 14001386.3
(22) Date of filing: 16.04.2014
(51) Int. Cl.: G06N 3/04

(54) **Optimization utilizing machine learning**

(30) Priority: 16.04.2013 US 201361812663 P
(71) Applicant: GTH Solutions Sp z.o.o., 05-410 Josefow (PL)
(72) Inventor: Wojciechowski, Robert, 05-410 Jozefow (PL)
(74) Representative: Humphrey-Evans, Edward John

(57) **Abstract**

A system for providing adaptive price optimization, comprising an adaptive neural network, the neural network further comprising a plurality of static and adaptive data, and a method for providing adaptive data learning behavior comprising the steps of making predictions based on data sources, comparing observed results to predicted results, and updating adaptive data sources.

## Description

### BACKGROUND OF THE INVENTION

### Field of the Art

The disclosure relates to the field of pricing management, and more particularly to the field of pricing and pricing structure management.

### Discussion of the State of the Art

Today revenue management systems design fixed algorithms that help manage revenue for hotels and other similar businesses. The problem with those systems is that they do not adapt to changing circumstances and behavior of users. For example, as the year goes by more users may be reading reviews of hotels, and the quality of reviews of a particular hotel may affect the decisions of that hotel's prospective customers more as the year progresses.

For example, a hotel located near JFK airport may see more customers booking when a fog comes in and strands many passengers because it recently put out a big advertisement in the main hall of the airport. At the same time, the process of setting up the parameters of revenue management algorithm is error prone. Human beings typically are not able to analyze millions of rows of data and infer the right conclusions.

As such, an apparent means of solving this problem is to use a machine-learning algorithm and to allow the algorithm to change itself. However, revenue management solutions currently existing in the art do not adapt and learn from changing circumstances. The current existing solutions do not work well because they utilize fixed (non-adaptive) algorithms.

### SUMMARY OF THE INVENTION

The invention solves the problem of creating an optimal pricing for a given vendor in order to maximize revenue or gross profit. This relates both to the actual value for the price as well as the structure of the price.

The structure of a pricing policy may contain various elements relevant to a particular vendor, such as "length of stay" for a hotel, or "luggage count" for an airline, or any other such value that may be deemed relevant to pricing by a vendor. It should also be appreciated that while reference may be made herein to a particular vendor type, for example hotels, alternate or additional vendors may be substituted according to the invention, such as airlines, transportation providers, energy companies, military organizations, or any other such service or product provider that may have need of pricing optimization. Additionally, some or all of the techniques described herein may be applied to optimization strategies unrelated to pricing in particular, such as optimizing shipping routes (for a transport company), finding optimal locations for new power generation such as wind farms (for an energy provider), strategic optimization for military applications, or any other such optimization that may make use of learning behavior as described herein. It should therefore be appreciated that while specific uses or examples may be described as exemplary embodiments, various alternatives and additional applications may be possible according to the invention and those described are intended to be exemplary for illustration of utility.

It is important to note that multiple rates can exist for a given vendor (such as a hotel, airline, transportation company, or other such service provider). The invention solves the problem of creating an optimal set of rates with an optimal set of restrictions. The invention may use one or more flexible learning algorithms in conjunction with such systems as neural networks or lookup tables to come up with the optimal pricing for a (for example) hotel. Furthermore, the invention may allow an algorithm to change on the fly and to learn from what is happening at a particular hotel and at other similar hotels in similar locations. For example, a hotel in a ski resort in Utah might be affected in a similar way by weather data as a hotel in Whistler, BC.

A key concept is that of algorithms' learning or adapting their behavior automatically, without the need for human intervention. This may be done by utilizing adaptable algorithms that learn, for example a neural network. It should be further appreciated that while a neural net may be described throughout, such description is exemplary of function of the invention and alternate means may be utilized according to the invention, neural nets being illustrated and described solely by way of example and for brevity of disclosure.

The invention may utilize software using different sets of data to help make a decision, such as, for example (but not limited to):
- prices for competing hotels, price trend reports and historical data on prices for competing hotels;
- data on reviews of hotels;
- weather data and historical weather data;
- passenger terminal data;
- historical data on reservations by different segments;
- STR data on performance of different hotel markets all over the world; or
- any other data that may affect business performance of a hotel or other entity.

This data may be statically or dynamically (i.e., in real time) uploaded into the system. Based on this data the software may make a decision on the pricing and pricing structure of a particular hotel or group of hotels using a neural net. The hotel may subsequently receive feedback on the performance of the algorithms of the invention, for example by receiving a report on whether a particular decision increases or decreases revenue. This may for example be determined by comparing the actual revenue realized and expected revenue realized.

One important aspect of the invention is that algorithms according to the invention may learn centrally from all hotels. So (continuing from a previous example) if a strategy works for a hotel in a ski resort in Utah, then the neural net will be able to apply a similar strategy for a hotel in Whistler, BC. At the same time it will verify how the strategy from Utah is performing in Whistler and create a new algorithm just for Whistler. It is also important to know that each hotel strategy is different. So the learning algorithm will adapt to individual needs of a hotel while taking into account and constantly updating strategies that work in a given market or similar markets.

A core concept of the system is a feedback loop wherein the system may compare the actual result (volume of reservations) with expected volume of reservations. An adaptive algorithm (such as utilizing machine learning) may evolve such as to maximize revenue or gross profit depending what parameters a hotel chooses.

### BRIEF DESCRIPTION OF THE DRAWING FIGURES

The accompanying drawings illustrate several embodiments of the invention and, together with the description, serve to explain the principles of the invention according to the embodiments. One skilled in the art will recognize that the particular embodiments illustrated in the drawings are merely exemplary, and are not intended to limit the scope of the present invention.
**Fig. 1** is a block diagram illustrating an exemplary hardware architecture of a computing device used in an embodiment of the invention.
**Fig. 2** is a block diagram illustrating an exemplary logical architecture for a client device, according to an embodiment of the invention.
**Fig. 3** is a block diagram showing an exemplary architectural arrangement of clients, servers, and external services, according to an embodiment of the invention.
**Fig. 4** is another block diagram illustrating an exemplary hardware architecture of a computing device used in various embodiments of the invention.
**Fig. 5** is a block diagram illustrating an exemplary flow of data within a neural network according to a preferred embodiment of the invention.
**Fig. 6** is a method diagram illustrating an exemplary method for adaptive behavior, according to a preferred embodiment of the invention.
**Fig. 7** is a block diagram of an exemplary system architecture for a neural network according to an embodiment of the invention.

### DETAILED DESCRIPTION

The inventor has conceived, and reduced to practice, a system and method for providing price optimization utilizing adaptive or learning behavior, such as by employing the use of neural networks.

One or more different inventions may be described in the present application. Further, for one or more of the inventions described herein, numerous alternative embodiments may be described; it should be understood that these are presented for illustrative purposes only. The described embodiments are not intended to be limiting in any sense. One or more of the inventions may be widely applicable to numerous embodiments, as is readily apparent from the disclosure. In general, embodiments are described in sufficient detail to enable those skilled in the art to practice one or more of the inventions, and it is to be understood that other embodiments may be utilized and that structural, logical, software, electrical and other changes may be made without departing from the scope of the particular inventions. Accordingly, those skilled in the art will recognize that one or more of the inventions may be practiced with various modifications and alterations. Particular features of one or more of the inventions may be described with reference to one or more particular embodiments or figures that form a part of the present disclosure, and in which are shown, by way of illustration, specific embodiments of one or more of the inventions. It should be understood, however, that such features are not limited to usage in the one or more particular embodiments or figures with reference to which they are described. The present disclosure is neither a literal description of all embodiments of one or more of the inventions nor a listing of features of one or more of the inventions that must be present in all embodiments.

Headings of sections provided in this patent application and the title of this patent application are for convenience only, and are not to be taken as limiting the disclosure in any way.

Devices that are in communication with each other need not be in continuous communication with each other, unless expressly specified otherwise. In addition, devices that are in communication with each other may communicate directly or indirectly through one or more intermediaries, logical or physical.

A description of an embodiment with several components in communication with each other does not imply that all such components are required. To the contrary, a variety of optional components may be described to illustrate a wide variety of possible embodiments of one or more of the inventions and in order to more fully illustrate one or more aspects of the inventions. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred. Also, steps are generally described once per embodiment, but this does not mean they must occur once, or that they may only occur once each time a process, method, or algorithm is carried out or executed. Some steps may be omitted in some embodiments or some occurrences, or some steps may be executed more than once in a given embodiment or occurrence.

When a single device or article is described, it will be readily apparent that more than one device or article may be used in place of a single device or article. Similarly, where more than one device or article is described, it will be readily apparent that a single device or article may be used in place of the more than one device or article.

The functionality or the features of a device may be alternatively embodied by one or more other devices that are not explicitly described as having such functionality or features. Thus, other embodiments of one or more of the inventions need not include the device itself.

Techniques and mechanisms described or referenced herein will sometimes be described in singular form for clarity. However, it should be noted that particular embodiments include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of embodiments of the present invention in which, for example, functions may be executed out of order from that shown or discussed, including substantially concurrently or in reverse order, depending on the functionality involved, as would be understood by those having ordinary skill in the art.

### Definitions

A "neural network" or "neural net", as used herein, refers to any electronic or computing system that may exhibit adaptive or learning behavior, such as by modifying behavior based on received input. In this manner a neural net may be seen as a closed and autonomous system that evolves or refines its own operation without the need for human interaction.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be disclosed herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, and the like), a consumer electronic device, a music player, or any other suitable electronic device, router, switch, or the like, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or the like).

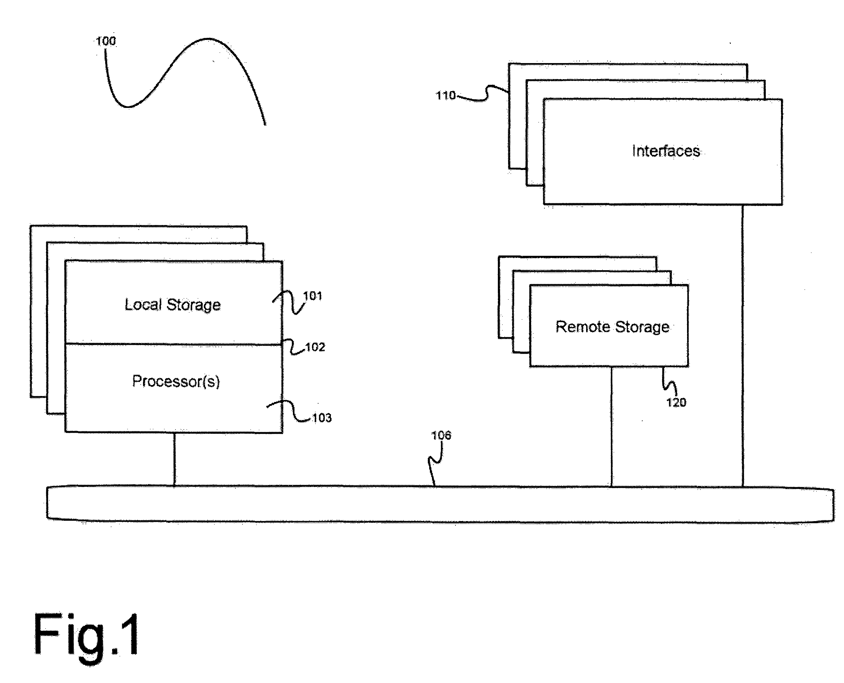

Referring now to **Fig. 1**, there is shown a block diagram depicting an exemplary computing device **100** suitable for implementing at least a portion of the features or functionalities disclosed herein. Computing device **100** may be, for example, any one of the computing machines listed in the previous paragraph, or indeed any other electronic device capable of executing software- or hardware-based instructions according to one or more programs stored in memory. Computing device **100** may be adapted to communicate with a plurality of other computing devices, such as clients or servers, over communications networks such as a wide area network a metropolitan area network, a local area network, a wireless network, the Internet, or any other network, using known protocols for such communication, whether wireless or wired.

In one embodiment, computing device **100** includes one or more central processing units (CPU) **102**, one or more interfaces **110**, and one or more busses **106** (such as a peripheral component interconnect (PCI) bus). When acting under the control of appropriate software or firmware, CPU **102** may be responsible for implementing specific functions associated with the functions of a specifically configured computing device or machine. For example, in at least one embodiment, a computing device **100** may be configured or designed to function as a server system utilizing CPU **102**, local memory **101** and/or remote memory **120**, and interface(s) **110.** In at least one embodiment, CPU **102** may be caused to perform one or more of the different types of functions and/or operations under the control of software modules or components, which for example, may include an operating system and any appropriate applications software, drivers, and the like.

CPU **102** may include one or more processors **103** such as, for example, a processor from one of the Intel, ARM, Qualcomm, and AMD families of microprocessors. In some embodiments, processors **103** may include specially designed hardware such as application-specific integrated circuits (ASICs), electrically erasable programmable read-only memories (EEPROMs), field-programmable gate arrays (FPGAs), and so forth, for controlling operations of computing device **100.** In a specific embodiment, a local memory **101** (such as non-volatile random access memory (RAM) and/or read-only memory (ROM), including for example one or more levels of cached memory) may also form part of CPU **102.** However, there are many different ways in which memory may be coupled to system **100.** Memory **101** may be used for a variety of purposes such as, for example, caching and/or storing data, programming instructions, and the like.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one embodiment, interfaces **110** are provided as network interface cards (NICs). Generally, NICs control the sending and receiving of data packets over a computer network; other types of interfaces **110** may for example support other peripherals used with computing device **100.** Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, Firewire™, PCI, parallel, radio frequency (RF), Bluetooth™, near-field communications (e.g., using near-field magnetics), 802.11 (WiFi), frame relay, TCP/IP, ISDN, fast Ethernet interfaces, Gigabit Ethernet interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces **110** may include ports appropriate for communication with appropriate media. In some cases, they may also include an independent processor and, in some in stances, volatile and/or non-volatile memory (e.g., RAM).

Although the system shown in **Fig. 1** illustrates one specific architecture for a computing device **100** for implementing one or more of the inventions described herein, it is by no means the only device architecture on which at least a portion of the features and techniques described herein may be implemented. For example, architectures having one or any number of processors **103** may be used, and such processors **103** may be present in a single device or distributed among any number of devices. In one embodiment, a single processor **103** handles communications as well as routing computations, while in other embodiments a separate dedicated communications processor may be provided. In various embodiments, different types of features or functionalities may be implemented in a system according to the invention that includes a client device (such as a tablet device or smartphone running client software) and server systems (such as a server system described in more detail below).

Regardless of network device configuration, the system of the present invention may employ one or more memories or memory modules (such as, for example, remote memory block **120** and local memory **101**) configured to store data, program instructions for the general-purpose network operations, or other information relating to the functionality of the embodiments described herein (or any combinations of the above). Program instructions may control execution of or comprise an operating system and/or one or more applications, for example. Memory **120** or memories **101, 120** may also be configured to store data structures, configuration data, encryption data, historical system operations information, or any other specific or generic non-program information described herein.

Because such information and program instructions may be employed to implement one or more systems or methods described herein, at least some network device embodiments may include nontransitory machine-readable storage media, which, for example, may be configured or designed to store program instructions, state information, and the like for performing various operations described herein. Examples of such nontransitory machine- readable storage media include, but are not limited to, magnetic media such as hard disks, floppy disks, and magnetic tape; optical media such as CD- ROM disks; magneto-optical media such as optical disks, and hardware devices that are specially configured to store and perform program instructions, such as read-only memory devices (ROM), flash memory, solid state drives, memristor memory, random access memory (RAM), and the like. Examples of program instructions include both object code, such as may be produced by a compiler, machine code, such as may be produced by an assembler or a linker, byte code, such as may be generated by for example a Java™ compiler and may be executed using a Java virtual machine or equivalent, or files containing higher level code that may be executed by the computer using an interpreter (for example, scripts written in Python, Perl, Ruby, Groovy, or any other scripting language).

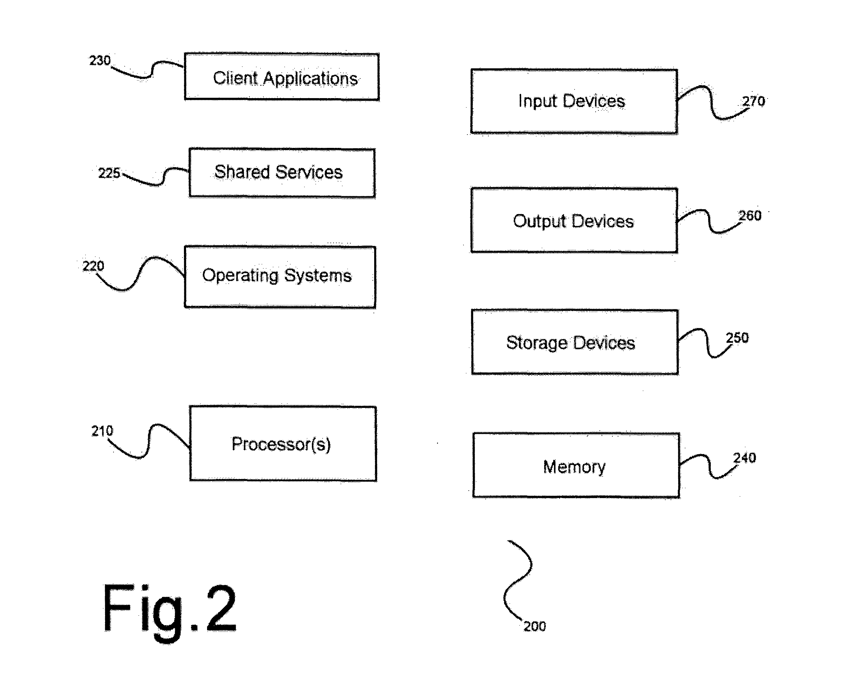

In some embodiments, systems according to the present invention may be implemented on a standalone computing system. Referring now to **Fig. 2**, there is shown a block diagram depicting a typical exemplary architecture of one or more embodiments or components thereof on a standalone computing system. Computing device **200** includes processors **210** that may run software that carry out one or more functions or applications of embodiments of the invention, such as for example a client application **230.** Processors **210** may carry out computing instructions under control of an operating system **220** such as, for example, a version of Microsoft's Windows™ operating system, Apple's Mac OS/X or iOS operating systems, some variety of the Linux operating system, Google's Android™ operating system, or the like. In many cases, one or more shared services **225** may be operable in system **200**, and may be useful for providing common services to client applications **230.** Services **225** may for example be Windows™ services, user-space common services in a Linux environment, or any other type of common service architecture used with operating system **210.** Input devices **270** may be of any type suitable for receiving user input, including for example a keyboard, touchscreen, microphone (for example, for voice input), mouse, touchpad, trackball, or any combination thereof. Output devices **260** may be of any type suitable for providing output to one or more users, whether remote or local to system **200**, and may include for example one or more screens for visual output, speakers, printers, or any combination thereof. Memory **240** may be random-access memory having any structure and architecture known in the art, for use by processors **210**, for example to run software. Storage devices **250** may be any magnetic, optical, mechanical, memristor, or electrical storage device for storage of data in digital form. Examples of storage devices **250** include flash memory, magnetic hard drive, CD-ROM, and/or the like.

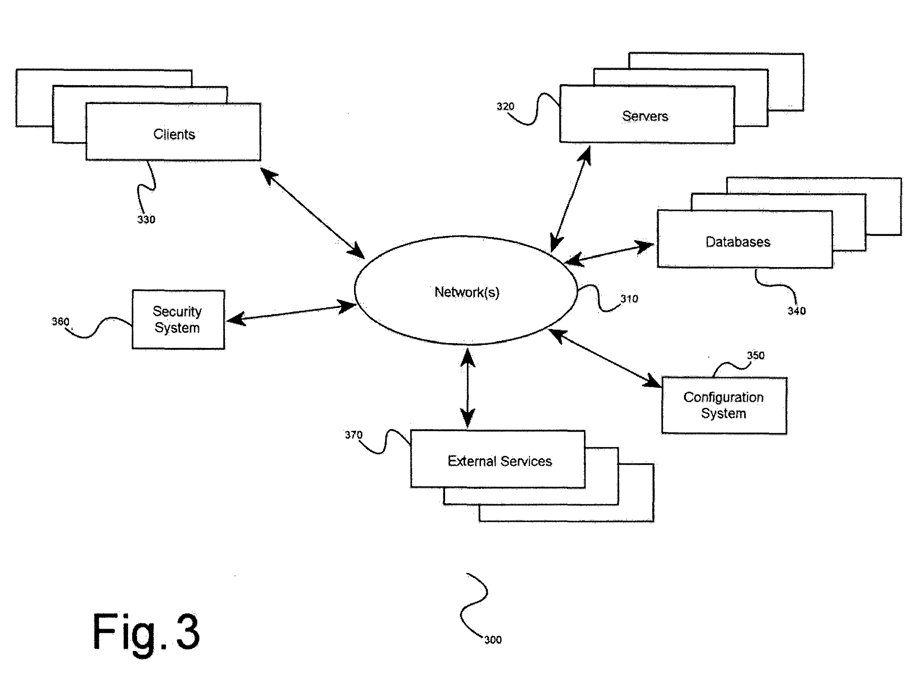

In some embodiments, systems of the present invention may be implemented on a distributed computing network, such as one having any number of clients and/or servers. Referring now to **Fig. 3****,** there is shown a block diagram depicting an exemplary architecture for implementing at least a portion of a system according to an embodiment of the invention on a distributed computing network. According to the embodiment, any number of clients **330** may be provided. Each client **330** may run software for implementing client-side portions of the present invention; clients may comprise a system **200** such as that illustrated in **Fig. 2****.** In addition, any number of servers **320** may be provided for handling requests received from one or more clients **330.** Clients **330** and servers **320** may communicate with one another via one or more electronic networks **310**, which may be in various embodiments any of the Internet, a wide area network, a mobile telephony network, a wireless network (such as WiFi, Wimax, and so forth), or a local area network (or indeed any network topology known in the art; the invention does not prefer any one network topology over any other). Networks **310** may be implemented using any known network protocols, including for example wired and/or wireless protocols.

In addition, in some embodiments, servers **320** may call external services **370** when needed to obtain additional information, or to refer to additional data concerning a particular call. Communications with external services **370** may take place, for example, via one or more networks **3 10.** In various embodiments, external services **370** may comprise web-enabled services or functionality related to or installed on the hardware device itself. For example, in an embodiment where client applications **230** are implemented on a smartphone or other electronic device, client applications **230** may obtain information stored in a server system **320** in the cloud or on an external service **370** deployed on one or more of a particular enterprise's or user's premises.

In some embodiments of the invention, clients **330** or servers **320** (or both) may make use of one or more specialized services or appliances that may be deployed locally or remotely across one or more networks **310.** For example, one or more databases **340** may be used or referred to by one or more embodiments of the invention. It should be understood by one having ordinary skill in the art that databases **340** may be arranged in a wide variety of architectures and using a wide variety of data access and manipulation means. For example, in various embodiments one or more databases **340** may comprise a relational database system using a structured query language (SQL), while others may comprise an alternative data storage technology such as those referred to in the art as "NoSQL" (for example, Hadoop Cassandra, Google BigTable, and so forth). In some embodiments, variant database architectures such as column-oriented databases, in-memory databases, clustered databases, distributed databases, or even flat file data repositories may be used according to the invention. It will be appreciated by one having ordinary skill in the art that any combination of known or future database technologies may be used as appropriate, unless a specific database technology or a specific arrangement of components is specified for a particular embodiment herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, most embodiments of the invention may make use of one or more security systems **360** and configuration systems **350.** Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments of the invention without limitation, unless a specific security **360** or configuration system **350** or approach is specifically required by the description of any specific embodiment.

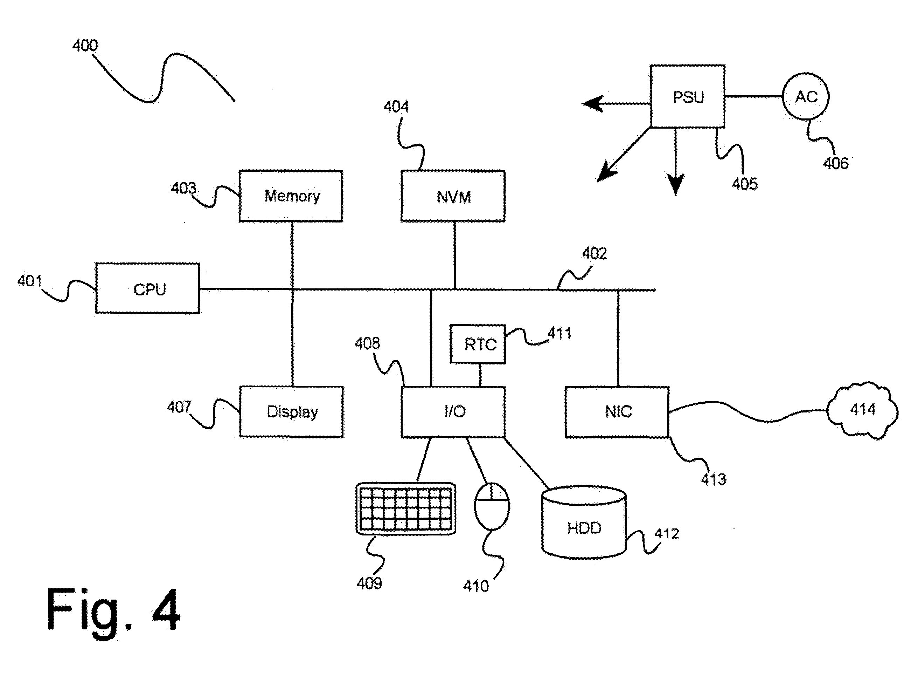

**Figure 4** shows an exemplary overview of a computer system **400** as may be used in any of the various locations throughout the system. It is exemplary of any computer that may execute code to process data. Various modifications and changes may be made to computer system **400** without departing from the broader scope of the system and method disclosed herein. CPU **401** is connected to bus **402**, to which bus is also connected memory **403**, nonvolatile memory **404**, display **407**, I/O unit **408**, and network interface card (NIC) **413.** I/O unit **408** may, typically, be connected to keyboard **409**, pointing device **410**, hard disk **412**, and real-time clock **411.** NIC **413** connects to network **414**, which may be the Internet or a local network, which local network may or may not have connections to the Internet. Also shown as part of system **400** is power supply unit **405** connected, in this example, to ac supply **406.** Not shown are batteries that could be present, and many other devices and modifications that are well known but are not applicable to the specific novel functions of the current system and method disclosed herein.

In various embodiments, functionality for implementing systems or methods of the present invention may be distributed among any number of client and/or server components. For example, various software modules may be implemented for performing various functions in connection with the present invention, and such modules may be variously implemented to run on server and/or client components.

### Conceptual Architecture

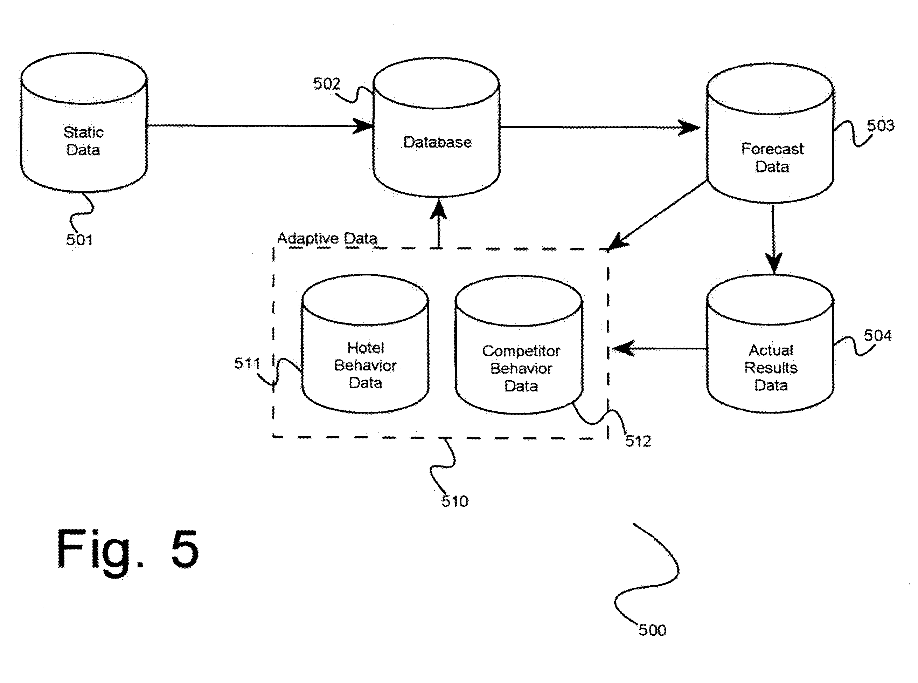

**Fig. 5** is an illustration of an exemplary system **500** for data flow within a neural network for adaptive or learning behavior regarding pricing data, according to a preferred embodiment of the invention. As illustrated, system **500** may comprise static data **501**, adaptive data **510**, predicted or forecast results data **503**, measured actual results **504**, and a database **502** or similar data storage.

Static data sources **501** may be any of a wide variety of measurable or retrievable data that may be relevant to operations of system **500**, such as (for example) data regarding customer behavior, customer performance, environment behavior, hotel performance, competition performance, or existing forecast data (such as expected or anticipated occupancy statistics). Such data may be stored in and retrieved from a variety of sources such as including but not limited to databases, physical data storage devices (such as optical or magnetic storage devices common in the art), or cloud-based or distributed storage technologies. It should be appreciated that in this manner a variety of data sources may be utilized by the invention, and the system **500** of the invention may be readily adaptable to additional or alternate data sources as appropriate.

Learning or adaptive data **510** may be roughly organized into two types according to the nature of the data, as illustrated hotel behavior **511** and competitor behavior **512** data. Such data may be, as described previously regarding static data, stored in and retrieved from a variety of data source types, and may be adaptable to a variety of additional or alternate types according to the invention. Such data may be considered to be "adaptive" in nature as it may change frequently based on predicted and observed results as illustrated, whereas static data **501** may simply be received from stored data sources (i.e., in a read-only fashion). In this manner, data may continuously be updated based upon actual observations in order to continuously refine operations, as illustrated.

As illustrated, a database **502** may be utilized to store data for operation, and it should be appreciated that such storage may be varied in nature such as including (but not limited to) physical storage such as optical or magnetic storage devices common in the art, software-based data storage systems such as any of a variety of database types common in the art, or distributed or cloud-based storage technologies. Database **502** may be utilized for such purposes as to store any retrieved or input data from various sources as illustrated, as well as to store any additional relevant data for system operations such as configuration or parameters for predictions or forecasts, or any other data that may be useful or relevant to system **500** or its operation.

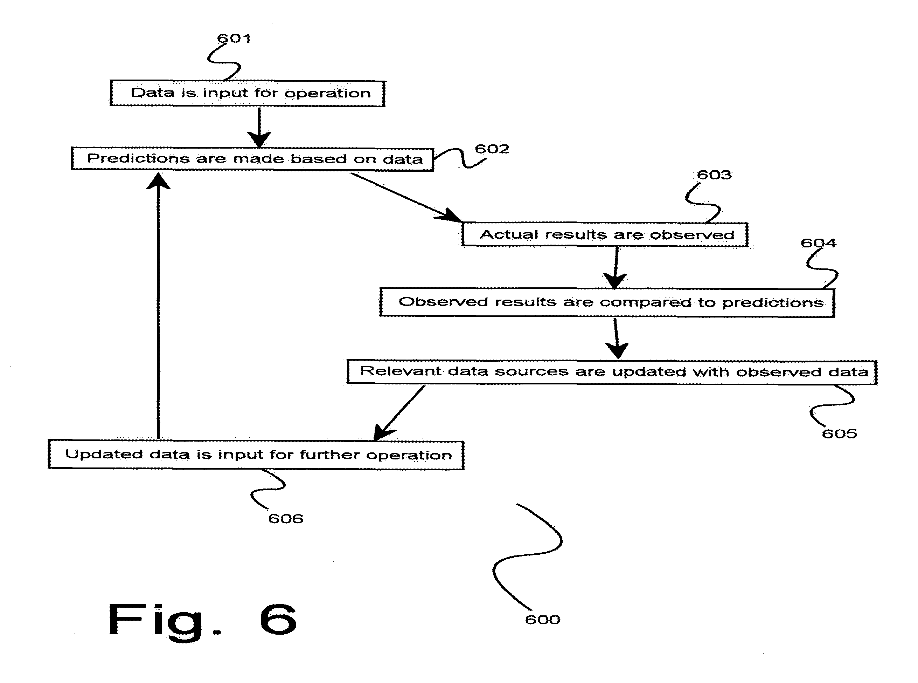

As illustrated, forecast data **503** may be utilized, and such data may be generally determined by forecast or prediction parameters such as may be stored within a database **502**, and may generally be utilized as input data for learning behavior as described below (referring to **Fig. 6**). Such data may include, for example, price predictions (such as expected trends in market value), occupancy data (such as anticipated occupancy levels based on historical data or known data such as reservations), or cost information such as predicted operation costs for a hotel.

As illustrated, actual results data **504** may be utilized, such as measured data within a similar timeframe or other defined parameters as existing forecast data **503** (such as measuring occupancy levels for a timeframe where occupancy levels had been predicted). Such data may then be utilized for learning behavior, such as (for example) comparing measured occupancy to expected or predicated occupancy to refine any algorithms or processes that may have been used to arrive at such predictions, such as to increase accuracy or reliability of future prediction data.

### Detailed Description of Exemplary Embodiments

**Fig. 6** is an illustration of an exemplary method **600** for adaptive price structuring such as using neural networks (or other adaptive learning algorithm-based systems), according to a preferred embodiment of the invention.

As illustrated, in an initial step **601** input data may be received by an adaptive network. Such data may come from a variety of sources, such as static or adaptive sources as described previously (referring to **Fig. 5**). This data may then be utilized in making predictions in a second step **602**, such as (for example) predicting occupancy levels of a hotel based on historical data (what was the occupancy like during this time period last year?). In a third step **603** actual results may be observed-continuing from the previous example, actual occupancy levels may be recorded during a timeframe. These measured observations may then be compared to predicted results in a fourth step **604,** such as (continuing the example) comparing observed occupancy levels to predicted occupancy such as to determine the accuracy or reliability of predictions. In a fifth step **605,** data sources may be updated with new information based on observations and comparisons performed, such as (for example) updating occupancy records with observed occupancy levels, or updating prediction logic based on the difference between predicated and observed occupancy. In a final step **606,** this new data may then be presented for further operation.

In this manner, it can be appreciated that operation has adapted based on new information and observable outcomes, forming an adaptive "learning" behavior that continues looping and adapting as it operates, continuously updating (refining) behavior and improving instantaneous time relevant efficiency, accuracy, and reliability of predictions.

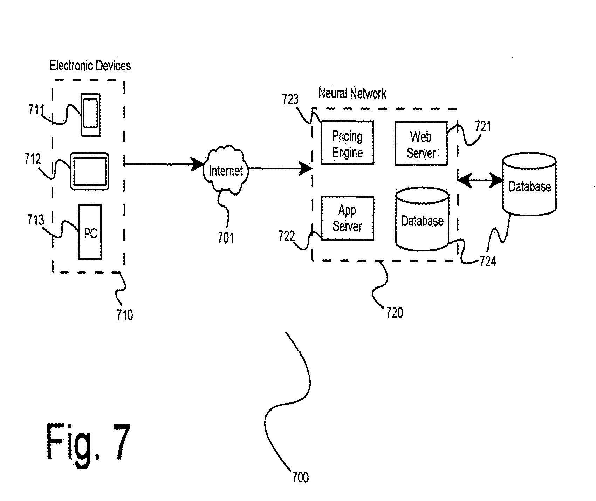

**Fig. 7** is a block diagram of an exemplary system architecture **700** for an adaptive neural network, according to an embodiment of the invention. As illustrated, a plurality of network-connected electronic devices **710** such as (for example, but not limited to) a smartphone **711,** tablet computing device **712,** or personal computer **713** may be connected to the Internet **701** or similar communications network. Such devices **710** may be considered, according to a data model described previously (referring to **Fig. 5**), to be static data sources **501**-that is, they may transmit or broadcast data to other components of a system **700**, but may not be able to receive or alter their data as a result of inbound communications (for example, an individual's personal computer may not be instructed to alter their personal data, but may choose to make such data available according to the embodiment). Additional devices may be connected for communication via the Internet or other communications network **701**, such as a neural network **720** for performing adaptive behavior functions according to the invention. Such a neural network (or "neural net") may further comprise a web server **721** that may connect to a communications network **701** and may send and receive network communications, an application server **722** that may receive and respond to communications from a web server, and a plurality of databases or similar data storage media **724** (such as, for example, physical or software-based data storage means such as a hard disk drive, removable storage media such as optical or magnetic tape-based storage, or a software database or similar storage scheme), that may be used for data storage by other components of a neural net **720**, and a pricing engine **723**, that may be used to process pricing data according to the invention (such as described previously, referring to **Fig. 5** and **Fig. 6**). In this manner, a database **502** may be considered to be an adaptive data source **510** (as previously described in **Fig. 5**), that is data may be both read or received from a database **502** (such as for use by a pricing engine **724**), as well as stored or written to a database **502** (such as a result of processing by a pricing engine **723** or other functions of a system **700** that may have data output). In this manner, a system **700** may be utilized for operation such as described previously in **Fig. 5**, and a neural net **720** may be seen to perform adaptive data functions as described.

It should be appreciated that while the descriptions and figures herein may make reference to the use of hotels regarding the system or operation of the invention, the nature of the invention may be readily adaptable to a variety of fields and may be desirable for a variety of use cases, essentially any area that may benefit from adaptive learning as described.

The skilled person will be aware of a range of possible modifications of the various embodiments described above. Accordingly, the present invention is defined by the claims and their equivalents.

## Claims

1. A system (500, 700) for optimization utilizing machine learning, the system comprising:
a plurality of static data sources stored (501, 701) and operating on a plurality of network-attached computers (710, 711, 712, 713); and
a pricing engine (723) stored and operating on a network-attached computer and comprising a machine learning algorithm and a plurality of adaptive data elements (510, 511, 512, 724);
wherein price and performance information pertaining to a business is received from the plurality of static data sources; and
wherein the pricing engine:
receives data (501) from the static data sources;
forms a prediction of future business performance (503) based on the received data;
subsequently compares the prediction to actual business performance and determines an indicia of accuracy of the prediction therefrom; and
updates at least one of the plurality of adaptive data elements based on the determined indicia of accuracy.

2. The system of claim 1, wherein the machine learning software comprises a neural network.

3. The system of claim 1 or 2, wherein the business is a first hotel.

4. The system of claim any one of claims 1 -3, wherein the static data (501) comprises at least historical weather data pertaining to the location of the first hotel, and wherein the prediction is made based at least in part on the historical weather data pertaining to the location of the first hotel.

5. The system of claim 4, wherein the static data further comprises at least historical weather data from a plurality of second hotels, and wherein the prediction is made at least in part based on aggregated weather data from the plurality of second hotels.

6. The system of claim 4, wherein the static data further comprises at least passenger terminal data from at least one airport.

7. A method for optimization utilizing machine learning, comprising the steps of:
(a) receiving (601), at a machine learning software stored and executing on a network-attached computer and comprising a plurality of adaptive data elements, data from a plurality of static data sources via a network;
(b) forming a prediction (602) of future business performance based on the received data;
(c) comparing the prediction to actual business performance (604) and determining an indicia of accuracy of the prediction therefrom; and
(d) updating (606) at least one of the plurality of adaptive data elements based on comparison results.

8. The method of claim 7, wherein the machine learning software comprises a neural network.

9. The method of claim 7 or 8, wherein the business is a first hotel.

10. The method according to any one of claims 7 - 9, wherein the static data comprises at least historical weather data pertaining to the location of the first hotel, and wherein the prediction is made based at least in part on the historical weather data pertaining to the location of the first hotel.

11. The method according to any one of claims 7 - 9, wherein the static data further comprises at least historical weather data from a plurality of hotels, and wherein the prediction is made at least in part based on aggregated weather data from the plurality of hotels.

12. The method according to any one of claims 7 - 11, wherein the static data further comprises at least passenger terminal data from at least one airport.
